# EUROPÄISCHE PATENTSCHRIFT

(11) **EP 2 180 971 B1**
(45) Veröffentlichungstag und Bekanntmachung des Hinweises auf die Patenterteilung: **04.01.2012**
(21) Anmeldenummer: 07801765.4
(22) Anmeldetag: 20.08.2007
(51) Int. Cl.: B23K 26/08, B23K 26/42, B23K 37/04

(54) **WERKSTÜCKAUFLAGE ZUR AUFNAHME EINES INSBESONDERE TAFELFÖRMIGEN WERKSTÜCKS IN EINER BEARBEITUNGSANLAGE**
WORKPIECE SUPPORT FOR RECEIVING AN ESPECIALLY PLATE-SHAPED WORKPIECE, IN A MACHINING INSTALLATION
PORTE-PIÈCE DESTINÉ À RECEVOIR UNE PIÈCE À USINER, NOTAMMENT EN FORME DE PLAQUE, DANS UNE INSTALLATION D'USINAGE

(43) Veröffentlichungstag der Anmeldung: 05.05.2010
(73) Patentinhaber: TRUMPF Werkzeugmaschinen GmbH + Co. KG, 71254 Ditzingen (DE)
(72) Erfinder: BLASER, Martin, 88267 Vogt (DE)
(74) Vertreter: Maser, Jochen
(86) Internationale Anmeldenummer: PCT/EP2007/007325
(87) Internationale Veröffentlichungsnummer: WO 2009/024163

(56) Entgegenhaltungen:
- EP-A- 1 413 391
- DE-C1- 19 615 928
- DE-C1- 19 709 746
- JP-A- 2001 170 790

## Beschreibung

Die Erfindung betrifft eine Werkstückauflage zur Aufnahme eines Werkstücks in einer Bearbeitungsanlage, insbesondere einer Laserbearbeitungsanlage, welche das Werkstück mit einem Schneidstrahl bearbeitet.

Zur Bearbeitung von insbesondere tafelförmigen Werkstücken in Laserbearbeitungsanlagen ist eine Werkstückauflage vorgesehen, die einen Rahmen mit mehreren, vorzugsweise parallel zueinander angeordneten, Auflageelementen aufweist, auf denen das zumindest eine zu bearbeitende Werkstück aufliegt. Die Auflageelemente weisen in regelmäßigen Abständen Tragpunktspitzen auf und bilden ein Auflagefeld für das oder die Werkstücke. Solche Laserbearbeitungsanlagen umfassen einen relativ zur Werkstückauflage bewegbaren Laserschneidkopf, um in einem Laserstrahl ein ruhendes Werkstück, das auf den Tragpunktspitzen der Auflageelemente aufliegt, zu bearbeiten. Darüber hinaus sind auch Laserbearbeitungsanlagen bekannt, bei denen die Werkstückauflage und/oder der Laserschneidkopf bewegbar sind. Während der Bearbeitung kommt es beim Überfahren der Tragpunktspitzen durch den Laserstrahl zu Problemen, wie beispielsweise Beschädigungen der Tragpunktspitzen durch Aufschweißungen, Beschädigungen der Tragpunktspitzen durch Wegschmelzen und/oder eine gleichbleibende gute Qualität zwischen dem Gut- und dem Restteil, da die Schneidverhältnisse an den Tragpunktspitzen anders als an den benachbarten Tragpunktspitzen sind.

Um die vorgenannten Probleme bei der Bearbeitung der Werkstücke zu reduzieren, geht aus der DE 38 03 918 A1 eine Werkstückauflage hervor, bei welcher die Auflageelemente in Abhängigkeit der Position des Laserstrahls während der Bearbeitung versenkbar sind. Durch eine mit dem Schneidkopf gekoppelte Mechanik wird jeweils dasjenige Auflageelement versenkt, welches bei der Bearbeitung im Auftreffbereich des Laserstrahls liegt.

Bei dieser Ausführungsform wird zwar das Auflageelement und somit die Tragpunktspitzen im Bereich des Laserschneidkopfes abgesenkt, jedoch kann es zu ungleichmäßigen Schnitten kommen, sofern ein Werkstück fast vollständig aus der Werkstücktafel ausgeschnitten ist und mit einem Ende an den abgesenkten Tragpunktspitzen aufliegt.

Aus der JP 2001-170790 ist eine Werkstückauflage zur Aufnahme eines Werkstücks in einer Bearbeitungsanlage bekannt, bei der die Werkstückauflage aus feststehenden Rahmenteilen mit Schlitzen zur Aufnahme der Auflageelemente aus bewegbaren Rahmenteilen besteht. Die feststehenden Rahmenteile sind am Rahmen befestigt. Die beweglichen Rahmenteile sind mit einem äußeren Ende an einer Kurbel angeordnet, so dass diese beim Betätigen der Kurbel eine Hin- und Herbewegung durchführen können. Diese Hin- und Herbewegung der Rahmenteile ist rechtwinklig zur Längserstreckung der Auflageelemente, jedenfalls nicht in der Längsrichtung der Auflageelemente vorgesehen. Dadurch wird ermöglicht, dass die Auflageelemente teils außerhalb des Wirkbereichs des Schneidstrahls positioniert werden. Dabei werden die Auflageelemente aus einer ersten wellenförmigen Position in eine gegenläufig wellenförmige Position übergeführt, wobei die Auflageelemente jeweils zu deren Anordnung in den Schlitzen verspannt werden. Diese Anordnung weist den Nachteil auf, dass durch eine Kurbelbewegung eine zwangsweise Verstellung der Position der Auflageelemente quer zu deren Längserstreckung eingeleitet wird. Eine solche zwangsweise Bewegung weist zwar den Vorteil auf, dass eine Überbelastung der Auflagestege aufgrund deren Biegung nicht auftritt, jedoch ist durch diese Kurbelbewegung eine in Längsrichtung der Auflageelemente ausgerichtete Verschiebebewegung nicht möglich, so dass in den Berührpunkten mit den beweglichen und feststehenden Rahmenteilen es zu Aufschweißungen am Rand und zum vorzeitigen Verschleiß kommen kann.

Aus der PCT/EP2006/004986 ist eine Werkstückauflage bekannt, bei der jedes Auflageelement durch eine Verschiebeeinrichtung betätigbar ist, um die Auflageelemente in Abhängigkeit der Geometrie des oder der zu bearbeitenden Werkstücke aus einer Referenzposition beziehungsweise aktiven Position in eine inaktive Position überzuführen. Dadurch kann die Qualität der Bearbeitung sichergestellt sein.

Bei solchen Auflageelementen, die aus einer Referenzposition in eine inaktive Position überführbar und bei einem nachfolgenden Bearbeitungsprogramm in eine entsprechende Referenzposition oder inaktive Position wieder überzuführen sind, tritt die Problematik auf, dass beim Überführen der Auflageelemente von der einen Position in die andere Position aufgrund von Verschmutzungen, Verbackungen oder Verschweißungen die Positionierung erschwert wird und die an der Verschiebebewegung beteiligten Komponenten der Bearbeitungsanlage beim Verschiebevorgang durch eine Überbelastung beschädigt werden können.

Der Erfindung liegt deshalb die Aufgabe zugrunde, eine Werkstückauflage für eine Bearbeitungsanlage vorzuschlagen, bei der eine Überlastung der an der Verschiebebewegung beteiligten Komponenten der Bearbeitungsanlage zu Beginn oder während eines Verschiebevorganges, die zwischen einer Referenzposition und einer inaktiven Position auftreten können, vermieden wird.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Durch die erfindungsgemäße Anordnung einer Überlastschutzvorrichtung zur Positionierung des oder der Auflageelemente zwischen einer Referenzposition und einer inaktiven Position oder einer beliebigen Zwischenposition in eine Verschiebeeinrichtung, in der sich das Auflageelement erstreckt, wird eine Beschädigung der an der Verschiebebewegung beteiligten Komponenten der Bearbeitungsanlage verhindert. Durch die an einer Verschiebeeinrichtung angreifende Überlastschutzvorrichtung wird das Überschreiten einer vorgegebenen Verstellkraft für die Verschiebebewegung des oder der Auflageelemente erfasst und/oder überwacht, so dass bei einem Überschreiten der Verstellkraft die Verschiebebewegung nicht mit der für die Verschiebebewegung vorgesehene Verstellkraft fortgeführt oder unterbrochen wird. Eine Verschiebebewegung der Auflageelemente ist dann zumindest beeinträchtigt und verursacht eine erhöhte Verstellkraft, wenn einzelne Abschnitte der Auflageelemente mit den die Auflageelemente aufnehmenden Trägerelementen oder weiteren Bauteilen durch Verschmutzungen, Verbackungen oder Verschweißungen an den Trägerelementen oder Bauteilen anhaften. Durch die Überlastschutzvorrichtung wird somit eine Beschädigung der an der Verschiebebewegung beteiligten Komponenten der Bearbeitungsanlage zu Beginn oder während der Verschiebebewegung durch eine Überlastung verhindert. Dadurch ist eine erhöhte Lebensdauer der Werkstückauflage mit ihren Komponenten aufgrund der Vermeidung von Beschädigungen der Überlast gegeben.

Nach einer vorteilhaften Ausgestaltung der Erfindung ist vorgesehen, dass die Überlastschutzvorrichtung zumindest während der Verschiebebewegung mit der Verschiebeeinrichtung und dem zumindest einen Auflageelement in Eingriff steht. Dadurch kann während der Verschiebebewegung die zwischen dem beziehungsweise den Auflageelementen und der Verschiebeeinrichtung auftretende Verschiebekraft erfasst werden, so dass bei einer auftretenden Überlast ein sofortiges Entkoppeln der durch die Verschiebeeinrichtung bewirkten Verschiebebewegung zu dem oder den Auflageelementen erfolgt.

Die Verschiebebewegung des zumindest einen Auflageelementes wird bevorzugt bei einer auftretenden Überlast stillgesetzt. Dadurch werden Beschädigungen der an der Verschiebebewegung beteiligten Komponenten der Bearbeitungsanlage vermieden. Gleichzeitig kann die Verschiebebewegung der Verschiebeeinheit fortgeführt werden, so dass weitere Auflageelemente, welche durch die Verschiebeeinheit betätigt werden, in eine inaktive Position, Zwischenposition oder Referenzposition übergeführt werden.

Nach einer weiteren bevorzugten Ausgestaltung der Erfindung ist vorgesehen, dass die Überlastschutzvorrichtung einen an einem Positionierelement angreifenden Mitnehmer und ein mit der Verstellkraft beaufschlagbares Stellelement umfasst. Das Stellelement ist bevorzugt auf eine Mindestkraft einstellbar, um die Auflageelemente, die von den Trägerelementen gehalten werden, zu verschieben. Gleichzeitig ermöglicht das Stellelement bei einer Überlast eine Relativbewegung des Mitnehmers zum Stellelement, so dass bei einer Fortführung der Verschiebebewegung durch die Verschiebeeinrichtung die auf das oder die Auflageelemente bis zu einer vorbestimmten Verstellkraft bewirkte Verschiebebewegung unterbrochen wird.

Nach einer weiteren bevorzugten Ausgestaltung der Erfindung ist vorgesehen, dass das Stellelement aus einem mit einem Fluid beaufschlagbaren Hubzylinder besteht. Dadurch kann eine kostengünstige Ausgestaltung für eine Überlastschutzvorrichtung ermöglicht sein. Alternativ kann das Stellelement auch als Stellmotor mit einer Sensorik oder eine Überlastkupplung ausgebildet sein. Ebenso können weitere Stellantriebe vorgesehen sein.

Bevorzugt ist eine Kolbenstange des Hubzylinders während einer Verschiebebewegung der Auflageelemente auf eine definierte Position einstellbar, so dass die während der Verschiebebewegung auftretende Verstellkraft gegen ein im Hubzylinder vorgegebenes Kammer- oder Speichervolumen des Fluides arbeitet. Somit kann das als Hubzylinder ausgebildete Stellelement nicht nur für eine von der Verschiebeeinheit getrennten Verschiebebewegung des Auflageelementes eingesetzt werden, sondern auch einen Überlastschutz bilden, in dem beispielsweise der Druck in der Speicherkammer des Hubzylinders sowie die Kolbenfläche des Hubzylinders eine definierte Verstellkraft bestimmen und einen Überlastpunkt definieren.

Bei einer auftretenden Überlast während der Verschiebebewegung ist vorteilhafterweise vorgesehen, dass das voreingestellte Kammervolumen zur Bestimmung der maximalen Verstellkraft aus dem Hubzylinder verdrängt wird und dadurch die Verschiebebewegung des Auflageelementes trotz des weiteren Verfahrens der Verschiebeeinheit unterbrochen ist. Zum Abströmen des Kammervolumens bei auftretender Überlast können bevorzugt Druckregelventile eingesetzt werden. Durch eine solche Überlastschutzvorrichtung wird eine auftretende Überlast mechanisch erfassbar.

Bevorzugt umfasst das als Hubzylinder ausgebildete Stellelement einen Doppelhubzylinder beziehungsweise einen beidseitig wirkenden Zylinder, so dass unabhängig der Verschieberichtung eine Überlastung erfassbar ist.

Nach einer bevorzugten Ausgestaltung der Erfindung ist vorgesehen, dass die Überlastschutzvorrichtung an einer Verschiebeeinrichtung befestigt ist, welche, vorzugsweise von unten, in eine Eingriffsposition zum Positionierelement des beziehungsweise der Auflageelemente einfahrbar ist, so dass der an dem Stellelement angeordnete Mitnehmer und das Positionierelement ineinander eingreifen. Dadurch wird ermöglicht, dass die Überlastschutzvorrichtung bedarfsweise für die Positionierung des oder der Auflageelemente in einer Referenzposition oder inaktiven Position in Eingriff mit dem Auflageelement anbringbar ist. Dies ermöglicht, dass beispielsweise eine Überlastschutzvorrichtung aufeinander folgend an benachbarten Auflageelementen zu deren Positionierung angreifen kann. Darüber hinaus ist ein einfaches Auswechseln von verschmutzten oder verschlissenen Auflageelementen ermöglicht.

Nach einer weiteren bevorzugten Ausgestaltung der Erfindung ist vorgesehen, dass der Mitnehmer der Überlastschutzvorrichtung zwei im Abstand zueinander angeordnete Mitnehmerelemente aufweist, die in einem Abstand zueinander angeordnet sind, der durch die jeweilige Endlage der Positionierelemente der Auflageelemente in einer Referenzposition und inaktiven Position bestimmt ist. Dadurch wird ermöglicht, dass ein Eingreifen beziehungsweise Angreifen der Überlastschutzvorrichtung unabhängig von der voreingestellten Position des oder der Auflageelemente ermöglicht ist. Sofern das Auflageelement in einer aktiven beziehungsweise in einer Referenzposition ist, greift das Mitnehmerelement während einer Verschiebebewegung erst in einer Endlage des Stellelementes an dem Positionierelement des Auflageelementes an. Sofern das Auflageelement in einer inaktiven Position ist, greift das Mitnehmerelement unmittelbar nach dem Überführen der Verschiebeeinrichtung in eine Eingriffsposition an dem Positionierelement des Auflageelementes an und bewirkt die Verschiebebewegung. Darüber hinaus kann durch diese Ausgestaltung auch ein Auflageelement in eine Referenzposition, Zwischenposition oder in eine inaktive Position übergeführt werden, welches eine Zwischenlage zwischen den beiden Positionen eingenommen hat.

Des Weiteren weist die Überlastschutzvorrichtung, welche bevorzugt durch einen Hubzylinder mit einer Kolbenstange ausgebildet ist, den Vorteil auf, dass diese Überlastschutzvorrichtung nach dem Überführen der Verschiebeeinrichtung in eine Referenzposition ansteuerbar ist, um durch eine Verschiebebewegung das oder die Auflageelemente von der Referenzposition in eine inaktive oder eine dazwischen liegende Position überzuführen. Die Kolbenstange des Stellelementes ist bevorzugt eingefahren beziehungsweise in einer Endlage, bevor die Eingriffsposition der Verschiebeeinrichtung an dem Auflageelement eingenommen ist.

Nach einer weiteren vorteilhaften Ausgestaltung der Erfindung ist vorgesehen, dass die Überlastschutzvorrichtung derart zur Verschiebeeinrichtung ausgerichtet ist, dass bei einer ansteuerbaren Verschiebebewegung des oder der Auflageelemente von einer inaktiven Position in eine Zwischenposition oder in eine Referenzposition die Kolbenstange des Stellelementes auf Zug beansprucht ist und gegen ein Speichervolumen im Hubzylinder arbeitet.

Zur Überwachung der eingenommenen Position des oder der Auflageelemente ist bevorzugt vorgesehen, dass die Endlage des oder der Mitnehmer nach einer Verschiebebewegung der Verschiebeeinrichtung durch eine Lichtschranke oder Sensoren erfasst wird. Die Überwachung mittels einer Lichtschranke weist den Vorteil auf, dass eine Vielzahl von auf einer Verschiebeeinrichtung angeordneten Mitnehmer gemeinsam überwacht werden können. Der Vorteil von Sensoren, die jeweils einem Mitnehmer zugeordnet sind, liegt darin, dass jeder Mitnehmer einzeln bezüglich der eingenommenen Position erfassbar ist.

Nach einer weiteren bevorzugten Ausgestaltung der Erfindung ist vorgesehen, dass das Stellelement der Überlastschutzvorrichtung aus einem magnetischen Hubzylinder besteht. Dadurch kann anstelle einer Betätigung über ein Fluid, wie beispielsweise Luft, Öl oder Gel, eine elektrische Ansteuerung des Mitnehmers ermöglicht werden. Die Arbeitsweise und Ansteuerung des magnetischen Hubzylinders ist analog zum mit einem Fluid beaufschlagten Hubzylinder, wie vorstehend beschrieben.

Nach einer weiteren alternativen Ausgestaltung zur mechanischen Erfassung einer Überlast ist ein Stellelement für eine Überlastschutzvorrichtung vorgesehen, welches eine vorgespannte Feder mit vorzugsweise einer konstanten Federkennlinie umfasst, die an einer Kolbenstange angreift. Diese Ausführungsform ermöglicht ebenfalls eine analoge Funktionsweise, wie die vorstehend beschriebene Ausgestaltung eines mit Fluid beaufschlagbaren Hubzylinders.

Nach einer weiteren alternativen Ausgestaltung der Erfindung zur mechanischen Erfassung einer Überlast ist vorgesehen, dass das Stellelement mit einem als Schwenkhebel ausgebildeten Mitnehmer zusammen wirkt, der mit einem Ende an einem Positionierelement des Auflageelementes angreift und mit seinem gegenüberliegenden Ende lösbar mit einer Kolbenstange des Stelleelementes verbunden ist und um eine an der Verschiebeeinrichtung angeordnete Schwenkachse drehbar gelagert ist. Eine solche Ausgestaltung weist den Vorteil auf, dass bei einer auftretenden Überlast während der Verschiebebewegung ein sofortiges Entkoppeln zwischen der Verschiebeeinrichtung und dem beziehungsweise der Auflageelemente erfolgt, um Beschädigungen zu vermeiden. Darüber hinaus können die auf die Auflageelemente einwirkenden Verstellkräfte in Abhängigkeit der Hebellängen und der Kraft des Stellelementes abgestimmt werden.

Der Mitnehmer der alternativen Ausführungsform weist an einem dem Stellelement zugeordneten Ende eine Rastvertiefung auf, an welche sich beidseitig eine Kulisse anschließt. Dadurch ist ermöglicht, dass ein Halteelement des Stellelementes in die Rastvertiefung eingreift und den Mitnehmer in einer definierten Position sichert. Sobald eine über die Verstellkraft hinaus gehende Überlast auftritt, ist ein Lösen der Verbindung zwischen dem Halteelement des Stellelementes und der Rastvertiefung des Mitnehmers ermöglicht, um die Verschiebebewegung zur Vermeidung von Beschädigungen zu unterbrechen. Unmittelbar nach dem Lösen der Rastverbindung wird eine Schwenkbewegung des Mitnehmers eingeleitet.

Des Weiteren ist bevorzugt vorgesehen, dass das Stellelement zur Lagefixierung des als Schwenkhebel ausgebildeten Mitnehmers gemäß der alternativen Ausführungsform als magnetischer Hubzylinder ausgebildet ist und dessen Kolbenstange ein Halteelement aufweist, welches in die Rastvertiefung des Mitnehmers eingreift und im Überlastfall entlang der angrenzenden Kulisse verfahrbar ist. Darüber hinaus sind die Kulissen vorzugsweise derart ausgebildet, dass ein einfaches Einführen und Überführen des Halteelementes aus einer gelösten Position des Mitnehmers in eine Verriegelungsposition ermöglicht ist. Die Kulissen können hierfür eine Auflaufschräge aufweisen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht von oben auf eine erfindungsgemäße Werkstückauflage,
- Figur 2: eine schematische Seitenansicht von einem Teil der Werkstückauflage mit einer Verschiebeeinrichtung in einer Eingriffsposition,
- Figur 3: eine schematische Seitenansicht von einem Teil der Werkstückauflage mit der Verschiebeeinrichtung in einer Referenzposition,
- Figur 4: eine schematische Seitenansicht von einem Teil der Werkstückauflage mit einer Verschiebeeinrichtung nach einer Verschiebebewegung des Auflageelementes aus einer Referenzposition heraus,
- Figur 5: eine perspektivische Ansicht einer Verschiebeeinrichtung,
- Figur 6: eine schematisch vergrößerte Ansicht einer Verschiebeeinrichtung zur Überwachung von Verschiebepositionen der Auflageelemente und
- Figuren 7 bis 9: schematische Seitenansichten von einem Teil der Werkstückauflage mit einer alternativen Überlastschutzvorrichtung zur Positionierung von Auflageelementen in Verschiebepositionen.

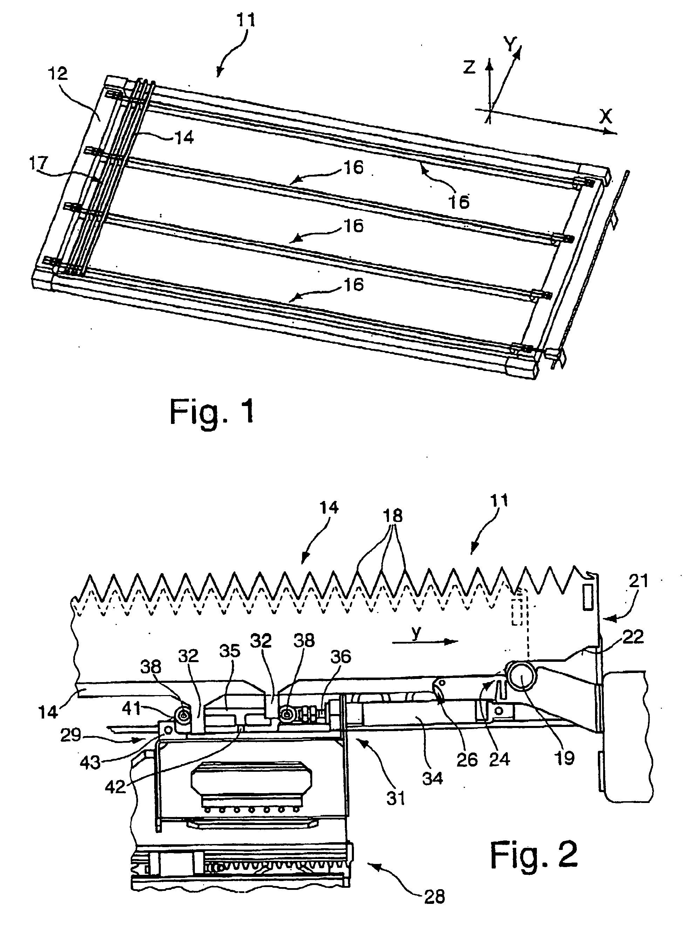

In Figur 1 ist eine perspektivische Ansicht von oben auf eine erfindungsgemäße Werkstückauflage 11 dargestellt. Diese Werkstückauflage 11 umfasst einen Rahmen 12, der zur Aufnahme von in Y-Richtung weisenden Auflageelementen 14 vorgesehen ist. Diese Auflageelemente 14 werden zumindest von zwei Trägerelementen 16, insbesondere im mittleren Bereich, geführt, welche insbesondere sich in X-Richtung erstrecken. Die Auflageelemente 14 bilden ein Auflagefeld 17 für ein oder mehrere nicht näher dargestellte Werkstücke, welche aus einem tafelförmigen Material hergestellt werden, das auf den Auflageelementen 14 aufliegt. Diese Werkstückauflage 11 ist als separate oder verfahrebare Palette vorgesehen, die in Laserbearbeitungsanlagen eingesetzt wird. Solche Paletten können außerhalb der Laserbearbeitungsanlage be- und entladen und zur Bearbeitung des oder der Werkstücke in die Laserbearbeitungsanlage eingefahren werden. Alternativ kann auch diese Werkstückauflage 11 stationär in einer Laserbearbeitungsmaschine vorgesehen sein. Das bevorzugt tafelförmige Grundmaterial kann aus verschiedenen Materialien bestehen und wird durch Schneiden mit einem Laserstrahl zu einzelnen Werkstücken bearbeitet.

In Figur 2 ist eine vergrößerte Seitenansicht eines Teils der Werkstückauflage 11 dargestellt. Das Auflageelement 14, welches in Y-Richtung verfahrbar ist, weist Tragpunktspitzen 18 auf, welche zur Aufnahme eines nicht näher dargestellten Werkstückes vorgesehen sind. Das Auflageelement 14 liegt mit einem Endabschnitt 21 auf einer Lagerstelle 19 auf und ist auf der gegenüberliegenden Seite von einer analogen Lagerstelle getragen. An dem Endabschnitt 21 des Auflageelementes 14 ist an seiner Unterseite eine Kulisse 22 vorgesehen, welche ermöglicht, dass das Auflageelement 14 bei einer Verschiebebewegung in und entgegen der Y-Richtung zwischen einer Referenzposition 24 in eine inaktive Position 26 verschiebbar ist. In der Referenzposition 24 liegen die Tragpunktspitzen 18 im Auflagefeld 17. In einer inaktiven Position 26 sind die Tragpunktspitzen 18 gegenüber dem Auflagefeld 17 abgesenkt. Im vorliegenden Ausführungsbeispiel ist die Referenzposition 24 gleichzeitig auch die aktive Position. Alternativ kann vorgesehen sein, dass diese beiden Positionen auch getrennt zueinander liegen. Die Tragpunktspitzen 18 der Auflageelemente 14 können auch in einer Zwischenposition angeordnet werden, das heißt, dass die Tragpunktspitzen 18 zur Aufnahme des Werkstücks dienen, jedoch benachbart oder in einer Zwischenlage zu den Tragpunktspitzen 18 der Auflageelemente 14 in einer Referenzposition 24 liegen.

Das Auflageelement 14 wird über eine Verschiebeeinrichtung 28, welche nachfolgend in Bild 5 näher beschrieben wird und in Figur 1 nur teilweise dargestellt ist, in der Referenzposition 24 und der inaktiven Position 26 positioniert. Hierfür ist vorgesehen, dass die Verschiebeeinrichtung 28, welche beispielsweise unterhalb der Auflageelemente 14 positioniert ist, in eine Eingriffsposition 29 übergeführt wird, das heißt, dass die Verschiebeeinrichtung 28 eine Einfahrbewegung in Z-Richtung durchführt. Dabei greift eine an der Verschiebeeinrichtung 28 angeordnete Überlastschutzvorrichtung 31 an einem Positionierelement 32 des Auflageelementes 14 an. Das Positionierelement 32 ist gemäß dem Ausführungsbeispiel als Steg, Zapfen oder Fahne ausgebildet, welches beispielsweise einstückig an dem Aufnahmeelement 14 angeordnet ist. Alternativ kann das Positionierelement 32 auch in das Auflageelement 24 eingesteckt, angeschweißt, angeklemmt oder durch eine weitere lösbare Verbindung befestigt oder eine Aussparung in dem Auflageelement 14 sein.

Die Überlastschutzvorrichtung 31 umfasst ein Stellelement 34, an welchem ein Mitnehmer 35 befestigt ist, der an dem Positionierelement 32 angreift. Das Stellelement 34 ist als Hubzylinder ausgebildet, der vorzugsweise mit einem Fluid angesteuert wird. Das Stellelement 34 umfasst eine Kolbenstange 36, an deren freien Ende der Mitnehmer 35 bevorzugt austauschbar befestigt ist. In der Eingriffsposition 29 ist die Kolbenstange 36 des Stellelementes 34 vorzugsweise in einer eingefahrenen Position angeordnet.

Der Mitnehmer 35 umfasst zwei Mitnehmerelemente 38, welche im Abstand derart zueinander angeordnet sind, dass beim Überführen der Verschiebeeinrichtung 28 in eine Eingriffsposition 29 das Positionierelement 32 zwischen den beiden Mitnehmerelementen 38 liegt und eingreift. Sofern das Auflageelement 14 in einer inaktiven Position 26 vorgesehen ist, liegt beispielsweise eine linke Kante des Positionierelementes 32 an dem linken Mitnehmerelement 38 an. Sofern das Auflageelement 14 in einer Referenzposition 24 vorgesehen ist, liegt eine rechte Kante des Positionierelementes 32 an dem rechten Mitnehmerelement 38 an.

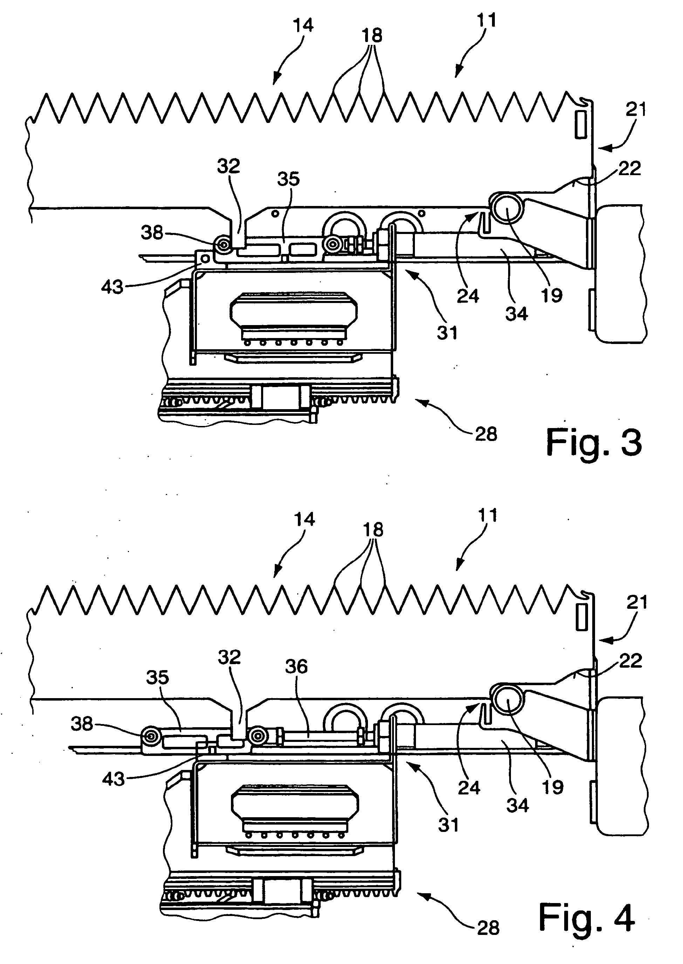

Ausgehend von dieser Eingriffsposition 29 kann die Verschiebeeinrichtung 28 durch eine Verschiebebewegung entgegen der Y-Richtung das oder die Auflageelemente 14 in eine Referenzposition 24 überführen. Dies erfolgt bevorzugt unabhängig der Position der einzelnen Auflageelemente 14, welche für ein nachfolgendes Bearbeitungsprogramm einzustellen sind, um eine gleiche Ausgangsbasis für alle Auflageelemente 14 zu schaffen. Dies ist in Figur 3 dargestellt.

Ausgehend von dieser Referenzposition 24 kann allein durch die Überlastschutzvorrichtung 31 jedes Auflageelement 14 einzeln in die für das nachfolgende Bearbeitungsprogramm definierte Position übergeführt werden. Sofern das Auflageelement 14 in einer Referenzposition 24 anzuordnen ist, bleibt die Überlastschutzvorrichtung 31 stillgesetzt. Sofern das Überführen des Auflageelementes 14 in eine aktive Position 26 erforderlich ist, wird das Stellelement 34 angesteuert, wodurch die Kolbenstange in Y-Richtung ausgefahren wird, wie in Figur 4 dargestellt ist, und das Auflageelement 14 über den Mitnehmer 35 in der inaktiven Position 26 oder einer dazwischen liegenden Zwischenlage positioniert wird.

Die Überlastschutzvorrichtung 31 kann alle Auflageelemente 14 gemeinsam, eine Gruppe von Auflageelementen 14 oder die Auflageelemente einzeln ansteuern, damit diese die erforderliche Position für das nachfolgende Bearbeitungsprogramm einnehmen.

Während der Verschiebebewegung der Auflageelemente 14 aus einer inaktiven Position 26 in eine Referenzposition 24 als auch bei einer Positionierung der Auflageelemente 14 in eine inaktive Position 26 oder Zwischenposition ist erforderlich, dass die auf die Auflageelemente 14 wirkende Verstellkraft überwacht wird, um eine Beschädigung des oder der Auflageelemente zu vermeiden. Durch die zwischen der Verschiebeeinrichtung 28 und den Auflageelementen 14 angeordnete Überlastschutzvorrichtung 31 wird dies ermöglicht.

Zur Überwachung und Vermeidung der Überlast beim Überführen des Auflageelementes 14 von einer inaktiven Position 26 in eine Referenzposition 24 ist das Stellelement 34 mit einer eingefahrenen Kolbenstange beim Überführen in die Eingriffsposition 29 angeordnet, und die Verschiebebewegung erfolgt entgegen der Y-Achse, so dass das Stellelement 34 auf Zug beansprucht ist. Dadurch arbeitet der an dem Positionierelement 32 angreifende Mitnehmer 35 gegen ein Kraftpolster im Stellelement 34, welches durch den Druck in der Speicherkammer und der Kolbenfläche definiert ist. Sobald eine Überlast auf das Stellelement 34 wirkt, ermöglicht ein Druckregelventil das Ausströmen des in der Kammer vorhandenen Speichervolumens des Fluides, so dass die Verstellkraft nicht erhöht wird, vorzugsweise sich verringert und die Verschiebebewegung der Verstelleinrichtung 29 in einer Referenzposition oder Endlage beendet werden kann, ohne dass eine Überlast auftritt.

Auch beim Überführen des Auflageelementes 14 aus der Referenzposition 24 in eine inaktive Position 26 oder eine Zwischenposition kann eine Überlastung auftreten. Die Überwachung und Vermeidung der Überlast erfolgt analog zur Übertragung der Auflageelemente 14 aus der inaktiven Position 26 in die Referenzposition 24.

Durch die Überlastschutzvorrichtung 31 werden die an der Verschiebebewegung der Auflageelemente 14 beteiligten Komponenten, wie beispielsweise die Werkstückauflage 11 und deren Bauteile und die Verschiebeeinrichtung 28 und deren Bauteile, nicht beschädigt.

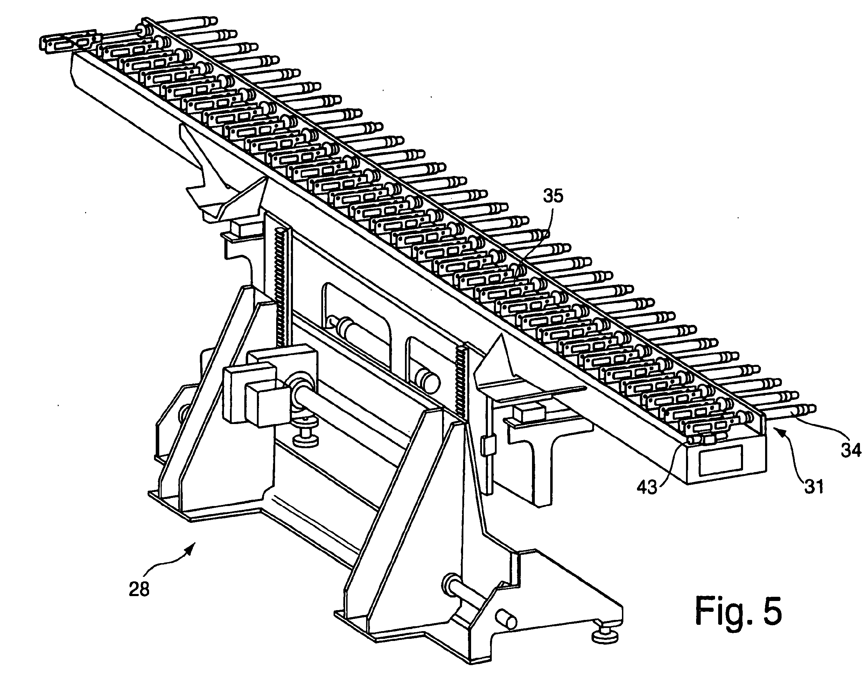

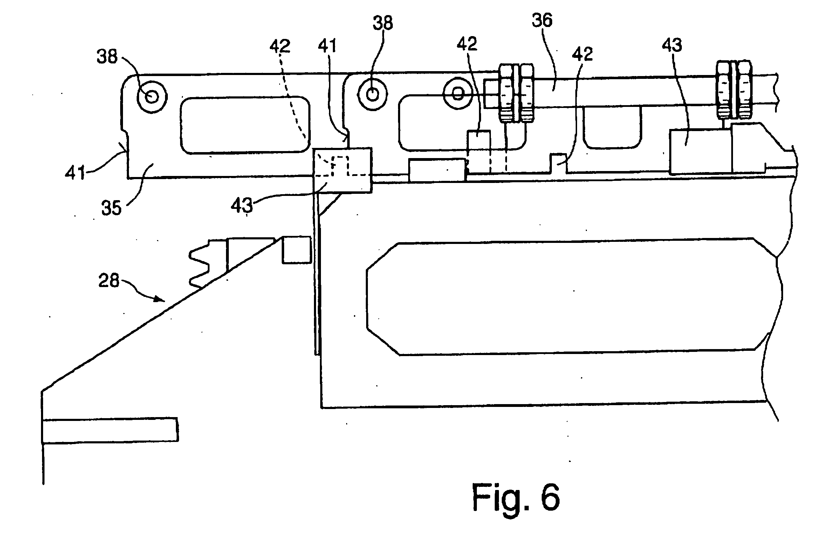

Die Verschiebebewegung der Auflageelemente 14 wird bevorzugt durch eine Lichtschranke 43 oder durch einen Laserstrahl überwacht. Dies ist beispielsweise perspektivisch in Figur 5 und näher in Figur 6 dargestellt. Die Verschiebeeinrichtung 28 gemäß Figur 5 umfasst eine Vielzahl von Überlastschutzvorrichtungen 31, die zueinander beabstandet angeordnet sind. Dabei ist vorgesehen, dass eine gegenüber den Auflageelementen 14 verringerte Anzahl von Überlastschutzvorrichtungen 31 vorgesehen ist. Somit kann gemäß dem Ausführungsbeispiel eine Überlastschutzvorrichtung 31 nacheinander drei zueinander benachbarte Auflageelemente 14 betätigen. Dadurch kann eine Verringerung der Bauteilkomponenten bei einer effizienten Einstellung ermöglicht sein. An einem Ende der Verschiebeeinrichtung 28 wird ein Laserstrahl ausgegeben beziehungsweise ist eine Lichtschranke 43 positioniert, die eine vordere Körperkante 41 der Mitnehmer 35 überwacht. Sofern diese von der Lichtschranke nicht erfasst wird, sind alle Mitnehmer 35 eingefahren, das heißt, dass die Auflageelemente 14 in eine Referenzposition 24 übergeführt sind. Zur Überprüfung der Mitnehmer 35 in einer ausgefahrenen Position 26 ist eine Aussparung 42 an dem Mitnehmer 35 vorgesehen, welche ebenfalls durch die Lichtschranke 43 überwacht wird. Hierfür gilt Analoges.

Alternativ kann vorgesehen sein, dass ausschließlich in einem dem Hubzylinder zugeordneten Bereich eine Lichtschranke 43 vorgesehen ist, welche eine Endlagenposition beziehungsweise eingefahrene Position des Mitnehmers 35 überwacht. Diese Überwachung mittels Laserstrahl oder Lichtschranke ermöglicht eine gleichzeitige Überwachung von einer Vielzahl von Mitnehmern 35. Alternativ kann auch die Position eines jeden einzelnen Mitnehmers 35 durch einen separat diesem zugeordneten Sensor erfasst werden. Die Einstellung der jeweiligen Positionen der Auflageelemente 14 erfolgt bevorzugt außerhalb der Laserbearbeitungsanlage durch die Verschiebeeinrichtung 28, so dass diese unabhängig von einer Bearbeitung eines Werkstücks in der Laserbearbeitungsmaschine erfolgt.

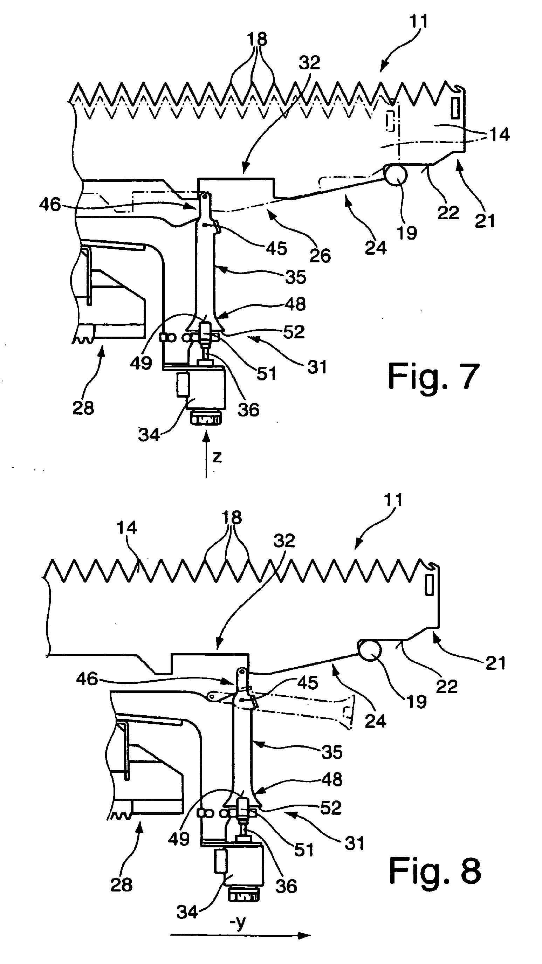

In den Figuren 7 bis 9 ist eine alternative Ausführungsform einer Überlastschutzvorrichtung 31 für die Auflageelemente 14 dargestellt. In Figur 7 ist in Analogie zu Figur 2 die Verschiebeeinrichtung 28 in einer Eingriffsposition 29 zum Auflageelement 14 dargestellt. Der Mitnehmer 35 ist als Schwenkhebel ausgebildet, der an der Verstelleinrichtung 28 um eine Schwenkachse 45 drehbar gelagert ist. Ein Ende 46 des als Schwenkhebel ausgebildeten Mitnehmers 35 ist als Mitnehmerelement 38 ausgebildet, welches in ein Positionierelement 32 des Auflageelementes 14 eingreift. Diese Anordnung stellt eine kinematische Umkehr zur Anordnung gemäß den Figuren 2 bis 4. dar. Das Positionierelement 32 ist als Aussparung oder Vertiefung ausgebildet, welches eine solche Länge umfasst, dass das Mitnehmerelement 38 des Schwenkarms unabhängig von einer Referenzposition 24 oder inaktiven Position 26 des Auflageelementes 14 eingreift.

Ein dem Ende 46 des Schwenkarmes gegenüberliegendes Ende 48 umfasst eine Rastvertiefung 49, welche lösbar mit dem Stellelement 34 verbunden ist. Bei diesem Ausführungsbeispiel ist das Stellelement 34 als magnetischer Hubzylinder beziehungsweise als Hubmagnet ausgebildet, der über eine in Z-Richtung bewegbare Kolbenstange 36 ein Halteelement 51 in der Rastvertiefung 49 positioniert. Rechts und links der Rastvertiefung 49 ist eine Kulisse 52 vorgesehen, welche einen gekrümmten Verlauf aufweist. Dadurch wird ermöglicht, dass im Falle einer auftretenden Überlast der Mitnehmer lösbar zum Stellelement 34 angeordnet ist, wobei durch die Schwenkbewegung des Schwenkarms das Halteelement 51 zunächst aus der Rastvertiefung 49 herausgedrückt wird und dann entlang der Kulisse 52 gleitet, bevor der Schwenkhebel frei rotiert, wie dies beispielsweise strichliniert in Figur 7 dargestellt ist.

Durch die Bestromung des Hubmagneten wird die Verstellkraft für die Verschiebebewegung des Auflageelementes 14 eingestellt beziehungsweise die Auslösekraft zum Lösen der Rastverbindung zwischen dem Mitnehmer 35 und dem Stellelement 34 bestimmt.

Figur 7 entspricht der Darstellung in Figur 2, bei welcher die Verschiebeeinrichtung 28 in einer Eingriffsposition 29 vorgesehen ist. Anschließend wird, wie in Figur 8 dargestellt, die Verschiebeeinrichtung 28 entgegen der Y-Richtung verfahren, wodurch der oder die in einer inaktiven Position 26 sich befindenden Auflageelemente 14 in eine Referenzposition 24 übergeführt werden.

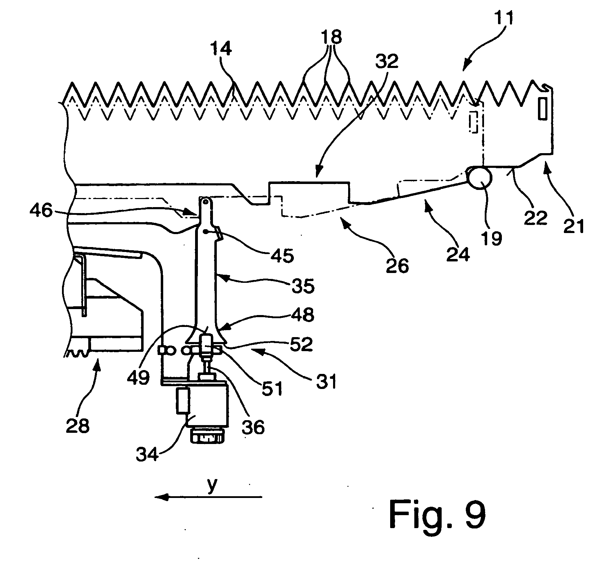

In Figur 9 ist beispielsweise das Positionieren eines Auflageelementes 14 aus einer Referenzposition 24 in eine inaktive Position 26 dargestellt.

Durch die Ausgestaltung des Mitnehmers 35 beziehungsweise des lösbaren Fixierens zum Stellelement 34 einerseits und der Anordnung des als Aussparung ausgebildeten Positionierelementes 32 wird bei Betrachtung der Figuren 8 und 9 offensichtlich, dass sowohl bei einer Verschieberichtung in als auch in entgegen der Y-Richtung bei einer auftretenden Überlast das Einleiten der Verstellkraft unterbrochen wird, da der Mitnehmer 35 aus seiner durch das Stellelement 34 fixierten Position ausgeschwenkt wird. Dadurch wird der Formschluss zwischen dem Mitnehmer 35 und dem oder den Auflageelementen 14 gelöst.

Alle vorbeschriebenen Merkmale sind jeweils für sich erfindungswesentlich und können beliebig miteinander kombiniert werden.

## Patentansprüche

1. Werkstückauflage zur Aufnahme eines Werkstücks in einer Bearbeitungsanlage, insbesondere Laserbearbeitungsanlage, welche das Werkstück mit einem Schneidstrahl bearbeitet, wobei die Werkstückauflage (11) in einem Rahmen (12) mehrere nebeneinander angeordnete Auflageelemente (14) aufnimmt, welche Tragpunktspitzen (18) aufweisen und ein Auflagefeld (17) für das oder die Werkstücke bilden, und mit zumindest einer Verschiebeeinrichtung (28), welche eine oder mehrere Auflageelemente (14) in ihrer Arbeitsposition zum Rahmen (12) durch eine Verschiebebewegung der Auflageelemente (14) in eine Verschieberichtung, in der sich das Auflageelement (14) erstreckt, in eine Zwischenposition oder inaktive Position (26) außerhalb des Wirkbereich des Schneldstrahls zur Bearbeitung des oder der Werkstücke positioniert, **dadurch gekennzeichnet,**
- **dass** nach einem ersten Bearbeitungsprogramm zur Bearbeitung des oder der Werkstücke ein oder mehrere Auflageelemente (14) für ein nachfolgendes Bearbeitungsprogramm in eine Referenzposition (24) oder inaktive Position (26) verfahrbar sind und
- **dass** zumindest eine an der Verschiebeeinrichtung (28) angreifende Überlastschutzvorrichtung (31) vorgesehen ist, welche eine die Verschiebebewegung bewirkende Verstellkraft, die auf das zumindest eine Auflageelement (14) zu Beginn oder während der Verschiebebewegung wirkt, erfasst und überwacht.

2. Werkstückauflage nach Anspruch 1, **dadurch gekennzeichnet, dass** für einen Verschiebevorgang die zumindest eine Überlastschutzvorrichtung (31) mit der Verschiebeeinrichtung (28) und mit zumindest einem Auflageelement (14) in Eingriff steht und bei einer auftretenden Überlast zu Beginn oder während der Verschiebebewegung die durch die Verschiebeeinrichtung (28) wirkende und auf das zumindest eine Auflageelement (14) übertragene Verschiebebewegung durch die Überlastschutzvorrichtung (31) entkoppelbar ist.

3. Werkstückauflage nach Anspruch 1, **dadurch gekennzeichnet, dass** die Verschiebebewegung des zumindest einen Auflageelementes (14) bei einer erfassten Überlast stillgesetzt ist.

4. Werkstückauflage nach Anspruch 1, **dadurch gekennzeichnet, dass** die Überlastschutzvorrichtung (31) einen an einem Positionierelement (32) des Auflageelementes (14) angreifenden Mitnehmer (35) und ein mit einer Verstellkraft beaufschlagbares Stellelement (34) umfasst.

5. Werkstückauflage nach Anspruch 4, **dadurch gekennzeichnet, dass** das Stellelement (34) aus einem mit einem Fluid beaufschlagbaren Hubzylinder besteht.

6. Werkstückauflage nach Anspruch 4 oder 5, **dadurch gekennzeichnet, dass** eine Kolbenstange (36) des Stellelementes (34) während einer Verschiebebewegung des oder der Auflageelemente (14) auf eine definierte Position einstellbar ist und dass während der Verschiebebewegung die Kolbenstange (36) gegen ein in dem Stellelement (34) vorgegebenes Kammervolumen arbeitet und vorzugsweise bei einer auftretenden Überlast das Kammervolumen des Stellelementes (34) verringerbar und die Verschiebebewegung unterbrochen ist.

7. Werkstückauflage nach Anspruch 4, **dadurch gekennzeichnet, dass** das Stellelement (34) als Doppelhubzylinder ausgebildet und vorzugsweise die Abströmgeschwindigkeit des Kammervolumens im Stellelement (34) durch ein Druckregelventil ansteuerbar ist.

8. Werkstückauflage nach Anspruch 1, **dadurch gekennzeichnet, dass** die Überlastschutzvorrichtung (31) an einer Verschiebeeinrichtung (28) befestigt ist, welche, vorzugsweise von unten, in eine Eingriffsposition (29) zum Positionierelement (32) des oder der Auflageelemente (14) verfahrbar ist, so dass ein Mitnehmer (35) der Überlastschutzvorrichtung (31) und das Positionierelement (32) ineinander eingreifen.

9. Werkstückauflage nach Anspruch 8, **dadurch gekennzeichnet, dass** der Mitnehmer (35) zwei im Abstand zueinander angeordnete Mitnehmerelemente (38) aufweist, die bevorzugt in einem Abstand zueinander angeordnet sind, der durch die jeweilige Endlage des Positionierelementes (32) eines Auflageelementes (14) in einer Referenzposition (24) und in einer inaktiven Position (26) bestimmt ist, oder dass in einer Eingriffsposition (29) der Verschiebeeinrichtung (28) eine Kolbenstange (36) des Stellelementes (34) in einer eingefahrenen Position vorgesehen ist.

10. Werkstückauflage nach Anspruch 4, **dadurch gekennzeichnet, dass** die Verschiebebewegung der Verschiebeeinrichtung (28) in eine Verschieberichtung erfolgt, so dass eine Kolbenstange (36) des Stellelementes (34) auf Zug beansprucht ist und gegen ein Kammervolumen in dem Stellelement (34) arbeitet.

11. Werkstückauflage nach Anspruch 4, **dadurch gekennzeichnet, dass** eine Endlage des oder der Mitnehmer (35) der Überlastschutzvorrichtung (31) nach einer Verschiebebewegung der Verschiebeeinrichtung (28) durch eine Lichtschranke (43) oder einen Laserstrahl erfassbar ist.

12. Werkstückauflage nach Anspruch 4, **dadurch gekennzeichnet, dass** das Stellelement (34) aus einem magnetischen Hubzylinder besteht, oder dass das Stellelement (34) aus einer vorgespannten Feder, vorzugsweise mit einer konstanten Federkennlinie, besteht, welche an den Mitnehmern (35) angreift.

13. Werkstückauflage nach Anspruch 1, **dadurch gekennzeichnet, dass** die Überlastschutzvorrichtung (31) ein Stellelement (34) aufweist, welches mit einem als Schwenkhebel ausgebildeten Mitnehmer (35) zusammenwirkt, wobei ein Ende des Mitnehmers (35) an einem Positionierelement (32) des oder der Auflageelemente (14) angreift und der Mitnehmer (35) vorzugsweise um eine an der Verschiebeeinrichtung (28) angeordnete Schwenkachse (45) drehbar gelagert ist.

14. Werkstückauflage nach Anspruch 13, **dadurch gekennzeichnet, dass** der Mitnehmer (35) an einem dem Stellelement (34) zuweisenden Ende (48) eine Rastvertiefung (49) aufweist, an welche sich beidseitig eine gekrümmte Kulisse (52) anschließt.

15. Werkstückauflage nach Anspruch 13, **dadurch gekennzeichnet, dass** das Stellelement (34) als magnetischer Hubzylinder ausgebildet ist und dessen Kolbenstange (36) ein Halteelement (51) aufnimmt, welches in die Rastvertiefung (49) des Mitnehmers (35) eingreift und nach dem Lösen der Rastverbindung entlang der daran angrenzenden Kulisse (52) verfahrbar ist.

## Claims

1. A workpiece support for receiving a workpiece in a machining unit, in particular a laser machining unit, which processes the workpiece using a cutting beam, said workpiece support (11) receiving in a frame (12) a plurality of support elements (14) disposed side by side that are provided with pointed carrier tips (18) and form a support zone (17) for the workpiece or the workpieces, said workpiece support having, in addition, at least one shifting device (28) by which one or a plurality of support elements (14) that are arranged in their respective working positions relative to the frame (12) are positioned, through a shifting movement of the support elements (14) in a shifting direction in which the support element (14) extends, in an intermediate position or inactive position (26) outside the range of action of the cutting beam used for machining the workpiece or the workpieces, **characterised in that**
- after completion of a first machining programme for machining the workpiece or the workpieces, one or a plurality of support elements (14) is movable, in view of a subsequent machining programme, to a reference position (24) or an inactive position (26), and
- at least one overload protection device (31) is provided which engages said shifting device (28) and which detects and monitors an adjusting force causing the shifting movement and acting upon the at least one support element (14) at the beginning of, and during the shifting movement.

2. The workpiece support as claimed in claim 1, **characterised in that** for performing a shifting operation the at least one overload protection device (31) is engaged with the shifting device (28) and with at least one support element (14), and **in that** when an overload occurs at the beginning of, or during the shifting movement, the shifting movement generated by, and transmitted to, the at least one support element (14) by the shifting device (28), is decouplable by the overload protection device (31).

3. The workpiece support as claimed in claim 1, **characterised in that** upon detection of an overload the shifting movement of the at least one support element (14) is stopped.

4. The workpiece support as claimed in claim 1, **characterised in that** the overload protection device (31) comprises an engaging piece (35) acting on a positioning element (32) of the support element (14) and an adjustment element (34) to which an adjusting force is applied.

5. The workpiece support as claimed in claim 4, **characterised in that** the adjustment element (34) consists of a stroke-type cylinder to which a pressurised fluid is applied.

6. The workpiece support as claimed in claim 4 or 5, **characterised in that** during a shifting movement of the support element or the support elements (14) a piston rod (36) of the adjustment element (34) is adjustable to a defined position and that during the shifting movement the piston rod (36) works against a given chamber volume within the adjustment element (34) and that preferably whenever an overload occurs the chamber volume of the adjustment element (34) is reducible and the shifting movement is interrupted.

7. The workpiece support as claimed in claim 4, **characterised in that** the adjustment element (34) is realised as a double-stroke cylinder and that preferably the outlet flow velocity of the chamber volume within the adjustment element (34) is controllable by a pressure regulator valve.

8. The workpiece support as claimed in claim 1, **characterised in that** the overload protection device (31) is fastened to a shifting device (28) which is moved, preferably from below, to an engagement position (29) with respect to the positioning element (32) of the support element or the support elements (14), such that an engaging piece (35) of the overload protection device (31) and the positioning element (32) become engaged with each other.

9. The workpiece support as claimed in claim 8, **characterised in that** the engaging piece (35) has two engaging elements (38) spaced apart from each other which are preferably disposed at a distance from each other that is defined by the end positions of the positioning element (32) of a support element (14) lying in a reference position (24) and an inactive position (26), respectively, or **in that** a piston rod (36) of the adjustment element (34) is provided in a retracted position when the shifting device (28) is in an engagement position (29).

10. The workpiece support as claimed in claim 4, **characterised in that** the shifting movement of the shifting device (28) takes place in a shifting direction, such that a piston rod (36) of the adjustment element (34) is under tensile load and works against a chamber volume in the adjustment element (34).

11. The workpiece support as claimed in claim 4, **characterised in that** an end position of the engaging piece or the engaging pieces (35) of the overload protection device (31) is detectable by a light barrier (43) or a laser beam after a shifting movement of the shifting device (28) has taken place.

12. The workpiece support as claimed in claim 4, **characterised in that** the adjustment element (34) consists of a magnetic stroke-type cylinder or **in that** the adjustment element (34) consists of a preloaded spring, preferably having a constant spring characteristic, which is applied to the engaging pieces (35).

13. The workpiece support as claimed in claim 1, **characterised in that** the overload protection device (31) has an adjustment element (34) which cooperates with an engaging piece (35) realised in the form of a pivoted Lever, with one end of the engaging piece (35) being applied to a positioning element (32) of the support element or the support elements (14) and the engaging piece (35) being preferably mounted in such a manner as to be pivotable about a pivot axis (45) disposed on the shifting device (28).

14. The workpiece support as claimed in claim 13, **characterised in that**, formed on an end (48) facing towards the adjustment element (34), the engaging piece (35) has a snap-fit recess (49) adjoined on both sides by a curved motion link (52).

15. The workpiece support as claimed in claim 13, **characterised in that** the adjustment element (34) is realised as a magnetic stroke-type cylinder and that the piston rod (36) thereof accommodates a holding member (51) which becomes engaged with the snap-fit recess (49) of the engaging piece (35) and which is movable along the adjacent motion link (52) once the snap-lock connection has been released.

## Revendications

1. Porte-pièce permettant de recevoir une pièce à usiner dans une unité d'usinage, notamment dans une unité d'usinage au laser, laquelle usine la pièce à usiner au moyen d'un jet de coupe, le porte-pièce (11) recevant dans un cadre (12) plusieurs éléments d'appui (14) disposés côte à côte, lesquels présentent des pointes de support (18) et forment une zone d'appui (17) pour la pièce ou les pièces à usiner, et avec au moins un mécanisme de déplacement (28) qui positionne dans une position intermédiaire ou position inactive (26) située en-dehors du champ d'action du jet de coupe destiné à l'usinage de la pièce ou des pièces à usiner un élément ou plusieurs éléments d'appui (14) se trouvant en position de travail par rapport au cadre (12), et ce par un mouvement de déplacement des éléments d'appui (14) dans une direction de déplacement dans laquelle s'étend l'élément d'appui (14), **caractérisé en ce que**
- après un premier programme d'usinage permettant l'usinage de la pièce ou des pièces à usiner, un élément ou plusieurs éléments d'appui (14) peuvent être déplacés dans une position de référence (24) ou une position inactive (26) en vue d'un programme d'usinage suivant, et
- il est prévu au moins un dispositif de protection contre les surcharges (31) qui s'appuie contre le mécanisme de déplacement (28) et qui saisit et contrôle une force de réglage, laquelle provoque le mouvement de déplacement et agit sur ledit au moins un élément d'appui (14) au début ou au cours du mouvement de déplacement.

2. Porte-pièce selon la revendication 1, **caractérisé en ce que** pour un processus de déplacement ledit au moins un dispositif de protection contre les surcharges (31) est en prise avec le mécanisme de déplacement (28) et avec au moins un élément d'appui (14), et **en ce que**, dans le cas d'une surcharge apparaissant au début ou au cours du mouvement de déplacement, le mouvement de déplacement produit par le mécanisme de déplacement (28) et transmis audit au moins un élément d'appui (14) peut être découplé par le dispositif de protection contre les surcharges (31).

3. Porte-pièce selon la revendication 1, **caractérisé en ce que** le mouvement de déplacement dudit au moins un élément d'appui (14) est stoppé lorsqu'une surcharge est saisie.

4. Porte-pièce selon la revendication 1, **caractérisé en ce que** le dispositif de protection contre les surcharges (31) comprend un entraîneur (35) s'appuyant contre un élément de positionnement (32) et un élément de réglage (34) pouvant être soumis à une force de réglage.

5. Porte-pièce selon la revendication 4, **caractérisé en ce que** l'élément de réglage (34) se compose d'un cylindre pouvant être soumis à un fluide sous pression.

6. Porte-pièce selon la revendication 4 ou 5, **caractérisé en ce qu'**une tige de piston (36) de l'élément de réglage (34) peut être réglée, pendant un mouvement de déplacement de l'élément ou des éléments d'appui (14), sur une position définie et **en ce que** la tige de piston (36) travaille, pendant le mouvement de déplacement, contre un volume prédéfini dans la chambre de l'élément de réglage (34) et **en ce que** de préférence le volume de la chambre de l'élément de réglage (34) peut, en cas de surcharge, être réduit et le mouvement de déplacement interrompu.

7. Porte-pièce selon la revendication 4, **caractérisé en ce que** l'élément de réglage (34) est réalisé sous forme de cylindre à double course, et **en ce que** de préférence la vitesse d'écoulement du volume de la chambre située dans l'élément de réglage (34) peut être contrôlée par une soupape régulatrice de pression.

8. Porte-pièce selon la revendication 1, **caractérisé en ce que** le dispositif de protection contre les surcharges (31) est fixé sur un mécanisme de déplacement (28) qui peut être déplacé, de préférence par en bas, dans une position d'engrènement (29) par rapport à l'élément de positionnement (32) de l'élément ou des éléments d'appui (14) de sorte qu'un entraîneur (35) du dispositif de protection contre les surcharges (31) et l'élément de positionnement (32) engrènent l'un dans l'autre.

9. Porte-pièce selon la revendication 8, **caractérisé en ce que** l'entraîneur (35) présente deux éléments entraîneurs (38) espacés l'un de l'autre, lesquels sont disposés de préférence à une distance donnée l'un de l'autre, laquelle est déterminée respectivement par les positions finales de l'élément de positionnement (32) d'un élément d'appui (14) donné se trouvant dans une position de référence (24) et dans une position inactive (26), ou **en ce qu'**il est prévu que, lorsque le mécanisme de déplacement (28) se trouve dans une position d'engrènement (29), une tige de piston (36) de l'élément de réglage (34) se trouve dans une position rentrée.

10. Porte-pièce selon la revendication 4, **caractérisé en ce que** le mouvement de déplacement du mécanisme de déplacement (28) s'effectue dans une direction de déplacement telle qu'une tige de piston (36) de l'élément de réglage (34) est soumise à l'effort de traction et travaille contre un volume de la chambre dans l'élément de réglage (34).

11. Porte-pièce selon la revendication 4, **caractérisé en ce qu'**une position finale de l'entraîneur ou des entraîneurs (35) du dispositif de protection contre les surcharges (31) peut être saisie, après un mouvement de déplacement du mécanisme de déplacement (28), par une barrière lumineuse (43) ou un rayon laser.

12. Porte-pièce selon la revendication 4, **caractérisé en ce que** l'élément de réglage (34) est composé d'un cylindre magnétique, ou **en ce que** l'élément de réglage (34) est composé d'un ressort tendu, de préférence avec une courbe caractéristique d'élasticité constante, lequel s'appuie contre les entraîneurs (35).

13. Porte-pièce selon la revendication 1, **caractérisé en ce que** le dispositif de protection contre les surcharges (31) présente un élément de réglage (34) qui coopère avec un entraîneur (35) réalisé sous forme de levier pivotant, une extrémité de l'entraîneur (35) s'appuyant contre un élément de positionnent (32) de l'élément ou des éléments d'appui (14) et l'entraîneur (35) étant, de préférence, monté de manière à pouvoir tourner sur un axe de pivotement (45) disposé sur le mécanisme de déplacement (28).

14. Porte-pièce selon la revendication 13, **caractérisé en ce que** l'entraîneur (35) présente, à une extrémité située du côté de l'élément de réglage (34), un évidement d'encliquetage (49) prolongé, de part et d'autre, par une coulisse courbe (52).

15. Porte-pièce selon la revendication 13, **caractérisé en ce que** l'élément de réglage (34) est réalisé sous forme de cylindre magnétique, et **en ce que** la tige de piston (36) de celui-ci reçoit un élément de retenue (51) qui engrène dans l'évidement d'encliquetage (49) de l'entraîneur (35) et qui, une fois l'assemblage par encliquetage enlevé, peut être déplacé le long de la coulisse (52) adjacente.
